# EUROPEAN PATENT SPECIFICATION

(11) **EP 0 787 900 B1**
(45) Date of publication and mention of the grant of the patent: **15.05.2002**
(21) Application number: 97300529.1
(22) Date of filing: 28.01.1997
(51) Int. Cl.: F02M 43/04, F02M 47/02

(54) **Injection valve arrangement**
Einspritzventil
Soupape d'injection

(30) Priority: 30.01.1996 FI 960414
(43) Date of publication of application: 06.08.1997
(73) Proprietor: Wärtsilä NSD OY AB, 00530 Helsinki (FI)
(72) Inventor: Jay, David Charles, 66500 Vahakyrö (FI); Prillwitz, Rolf, 71696 Möglingen (DE)
(74) Representative: Newby, Martin John

(56) References cited:
- EP-A- 0 527 362
- EP-A- 0 546 985
- EP-A- 0 575 887
- EP-A- 0 661 442
- EP-A- 0 686 763
- DE-A- 2 028 442

## Description

This invention relates to an injection valve arrangement of an internal combustion engine, the injection valve arrangement being according to the preamble of claim 1.

Different electronically controlled injection arrangements are known for injecting different additional media, such as water, liquid ammonia, urea or the like, into the combustion chamber of an engine for influencing the combustion process so as to reduce the amount of nitrogen oxides, NOx, created. However, drawbacks of these known arrangements are their complicated constructions and their use of space, caused in particular by the use of oil as a pressure medium for controlling the injection process. A practical consequence of this is that it is necessary, to prevent any possibility of mixing of the oil and the additional medium, to provide proper sealing arrangements.

EP-A-0686763 discloses a fuel injection valve for a combustion engine. A control piston of the valve, connected to an injection valve element, includes a first control space and a second control space the volume and fuel control pressure of which can be changed by the piston motion. During the closing motion, the control piston is additionally assisted by the pressure of the fuel. The valve includes separate means for effecting pressures in the control spaces making the valve complex and increasing the risk of valve malfunction.

EP-A-0527362, which represents the closest state of the art, discloses a fuel injection nozzle and a reduction medium injection nozzle provided in a single nozzle body. However, the nozzle body arrangement does not provide adequate operation since the two nozzles are sufficiently close that the fluids injected by them interfere with each other in operation.

An aim of the present invention is to provide a novel arrangement for the injection of an additional medium, in which arrangement the drawbacks referred to above of the known devices are eliminated. A further aim is to provide an arrangement which is applicable, especially, for the injection of water and which has an uncomplicated and compact construction which is reliable in operation.

According to the present invention there is provided an injection valve arrangement as claimed in the ensuing claim 1. The valve body part includes a fuel injection valve having nozzle orifices arranged at different levels, in the axial direction of the cylinder, to the nozzle orifices of the additional medium valve. Thus, the arrangement according to the invention is particularly advantageous when both fuel and additional pressure medium are provided in the same valve body part. Also, since the pressure medium to be injected into the cylinder and the medium to be utilized for controlling the injection are the same medium, no special sealing of the valve member to the valve body part between the chambers is required.

In a favourable embodiment of the invention the second chamber is connected to the feed duct through a first throttled aperture and to the control valve through a second throttled aperture. In this case only a single feeding means is required to feed the additional medium to the first and second chambers.

The minimum cross-sectional area of the second throttled aperture is substantially larger, preferably approximately five times larger, than the minimum cross-sectional area of the first throttled aperture. Thus, the decrease of pressure in the second chamber cannot harmfully act, via the feed duct, on the pressure of the additional medium in the first chamber.

The feed duct for the additional medium may further be provided with pressure control means upstream of where the additional medium is fed into the first chamber and the said second chamber.

Water is, with advantage, used as the additional medium.

The control valve is with advantage located in a third chamber which is provided with a drain passage for the additional medium. In addition, the control valve is spring-loaded towards its closing position. In practice the control valve may with advantage comprise a solenoid valve, which receives an electric control signal from an electronic control unit in dependence on the operation of the engine. This enables as precise a control as possible of the injection of the additional medium.

The invention can with advantage be applied to large diesel engines. In this specification the term "large diesel engine" is intended to refer to such an engine that can be used, for example, as the main propulsion engine or as an auxiliary engine for a ship or in a power plant for producing electricity and/or heat energy.

An embodiment of the invention will now be described, by way of example only, with particular reference to the accompanying drawing, the sole figure of which shows in section an embodiment of an injection valve arrangement according to the invention.

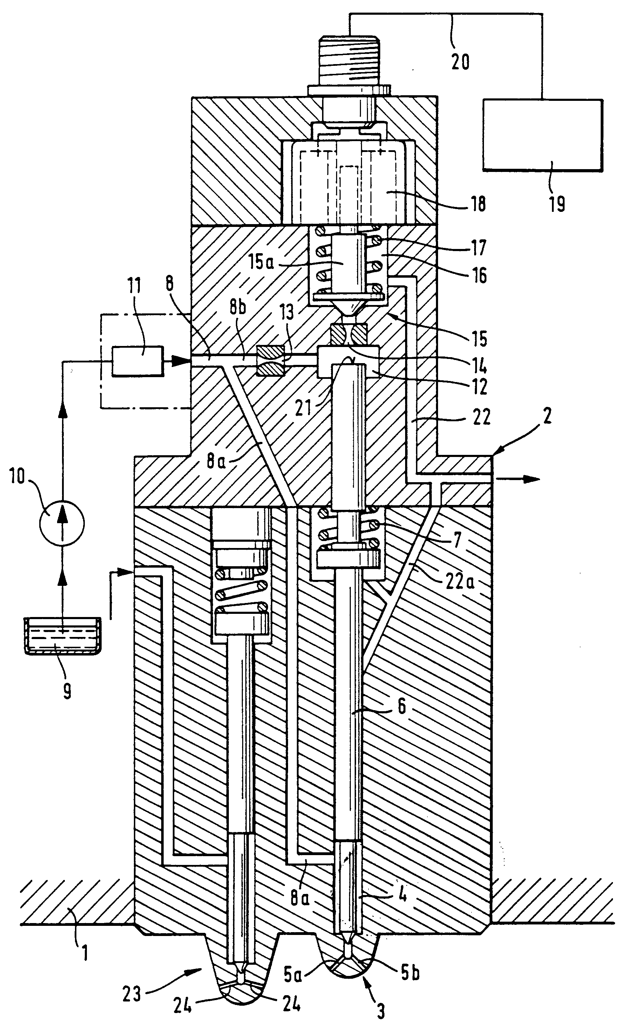

In the drawing 1 indicates a cylinder head of an engine against which there is supported a valve body part 2. The body part 2 includes an injection valve 3 comprising a chamber 4 containing pressure medium to be injected into a combustion chamber of a cylinder (not shown) through one or more nozzle orifices 5a, 5b under the control of an elongate valve member 6. A spring 7 resiliently urges the valve member 6 into an injection preventing closing position. The valve 3 may with advantages be a so-called needle valve. In the following the pressure medium is presumed to be water although other less preferred pressure media could be used.

The water to be injected into the cylinder is pumped by a pump 10 continuously from a container 9 and is fed through a feed duct 8 and a branch 8a into the chamber 4. Arranged between the pump 10 and the feed duct 8 there is a so-called flow fuse 11 for detecting changes in the flow pressure and for controlling the flow according to need, for instance it cuts off the feeding of water if the valve member 6 becomes jammed in a non-closed position. On the other hand, at the beginning of an injection cycle, the pressure tends to decrease, whereby the flow fuse 11 can be arranged to provide a pressure pulse so that the pressure does not decrease more than a certain amount, for example no more than 30 bar, from the desired injection pressure.

Water is also arranged to be fed into a second chamber 12 through a branch 8b of the feed duct having a throttled aperture 13 located therein. The water in the second chamber 12 acts on the valve member 6 via a surface 21. Since the pressure in the chamber 12 together with the spring force of the spring 7 normally exceed the pressure of the water in the chamber 4, the valve member 6 normally remains in its closed position and no injection occurs into the cylinder.

The chamber 12 can be connected via a throttled aperture 14 and under the control of a control valve 15 with a chamber 16 in the valve body part 2 and further with a drain passage 22, through which the water can be returned to the container 9. The control valve 15 includes a valve member 15a whose operation is controlled by solenoid means 18.

The solenoid means 18 receives control signals 20 from an electronic control unit 19, which may be preprogrammed in a known manner to provide the control signals at the correct time in accordance with the working cycle of the engine, for example on the basis of signals from a sensor sensing the rotation of the crank shaft of the engine. When there is no current in the solenoid means 18, a spring 17 urges the valve member 15a into a closed position in which the throttled aperture 14 is closed.

When a control signal 20 connects current to the solenoid means 18, the valve member 15a is moved against the force of the spring 17 into an open position in which the connection from the chamber 12 through the throttled aperture 14 into the drain passage 22 is opened. This results in the pressure in the chamber 12 decreasing sufficiently for the valve member 6 of the injection valve 3 to be moved by the pressure existing in the chamber 4 against the force of the spring 7 into an open position, whereby injection of water occurs through the nozzle orifices 5a, 5b into the combustion chamber of the cylinder.

The provision of the throttled aperture 13 and the flow fuse 11 ensure, however, that the decrease in pressure in the chamber 12 does not affect the pressure of the water in the chamber so that the injection occurs under sufficient pressure. When the throttled aperture 14 is used, a smaller force of the spring 17 will suffice resulting in a more compact construction. On the other hand, in order for the pressure in the chamber 12 to decrease sufficiently and quickly enough when the control valve 15 is opened, the minimum cross-section of the throttled aperture 14 must be suitably larger than that of the throttled aperture 13. In practice the ratio of the minimum cross-sectional areas of the throttled apertures 14 and 13 may typically, for example, be about 5:1.

As can be seen in the drawing, the control valve 15 is positioned in association with, or in the near vicinity of, the chamber 12 so that the total volume of the chamber 12 and of the passages between the chambers 12 and 16 is relatively small. This ensures effective and precise control for opening and closing of the injection of the auxiliary medium into the combustion chamber.

When both the pressure medium to be injected and the pressure medium for the control valve are the same medium, that is with advantage water, no specific sealing of the valve member 6 is needed between the chambers 4 and 12. Excess water can be collected through a branch 22a of the drain passage 22. On the other hand the utilization of water must be taken account of when selecting the materials for the solenoid means 18 and designing the environment of its operation.

A compact construction is achieved when an actual fuel injection valve 23 with nozzle orifices 24 is integrated into the valve body part 2. With such a construction, the injection of both the fuel and the additional medium can be mutually arranged with ease so that an optimum result can be obtained from the viewpoint of the combustion and of the noxious additional substances resulting therefrom. According to the present invention the nozzle orifices 24 are at different levels to the nozzle orifices 5a, 5b and thus project into different axial positions of the combustion chamber of the cylinder.

The invention can also be implemented so that different feeding means, for instance separate pumps and feed ducts, are used for feeding the additional medium into the first chamber 4 and the second chamber 12, respectively. In this case the first throttled passage 13 is not necessarily required, but in other respects the arrangement will generally be more complicated.

## Claims

1. An injection valve arrangement of an internal combustion engine for injecting a pressure medium into a combustion chamber of a cylinder in the internal combustion engine, whereby the pressure medium is an additional medium for reducing the contents of noxious substances resulting from combustion of fuel in the combustion chamber; the arrangement comprising a valve body part (2) including a fuel injection valve (23) having nozzle orifices (24), a first chamber (4), a feed duct (8,8a) for feeding said additional medium continuously to the first chamber (4), at least one nozzle orifice (5a,5b) leading from the first chamber (4) for injecting the additional medium into the combustion chamber of the cylinder, an injection valve (3) for controlling the feeding of the additional medium from said first chamber (4) into the combustion chamber, the injection valve (3) having an elongate valve member (6) which is spring-loaded (7) towards a closing position in which injection of the additional medium is prevented, **characterised in that** the arrangement further includes a second chamber (12), feed means (8b) for feeding said additional medium to the second chamber (12) so that the pressure prevailing in the latter urges the valve member (6) towards said closing position, and a control valve (15) associated with said second chamber (12) and arranged to control the pressure in said second chamber (12) so that movement of the control valve (15) to an open position causes the pressure to fall in the second chamber (12) so that the valve member (6) is moved from its closing position into a position allowing injection of the additional medium, and **in that** said nozzle orifices (24) of the fuel injection valve (23) are arranged at different levels in the axial direction of the cylinder to the nozzle orifice(s) (5a,5b) of the said additional medium valve (3).

2. An injection valve arrangement according to claim 1, **characterised in that** the feed means (8b) includes a first throttled aperture (13) and **in that** the second chamber (12) is connected to the said control valve (15) through a second throttled aperture (14).

3. An injection valve arrangement according to claim 2, **characterised in that** the minimum cross-sectional area of the second throttled aperture (14) is substantially larger, preferably approximately five times larger, than the minimum cross-sectional area of the first throttled aperture (13).

4. An injection valve arrangement according to any of the preceding claims, **characterised in that** pressure control means (11) is arranged upstream of said feed duct for controlling the feeding of said additional medium into said first and second chambers (4,12).

5. An injection valve arrangement according to any of the preceding claims, **characterised in that** the additional medium is water.

6. An injection valve arrangement according to any of the preceding claims, **characterised in that** the control valve (15) is located in a third chamber (16), which is provided with a drain passage (22) for the additional medium, and **in that** the control valve (15) is spring-loaded (17) towards a closed position.

7. An injection valve arrangement according to any of the preceding claims, **characterised in that** the control valve (15) is a solenoid valve which is controlled from an electronic control unit (19) by electric control signals (20) which are dependent on the operation of the engine.

8. An internal combustion engine provided with an injection valve arrangement according to any of the preceding claims.

9. An internal combustion engine according to claim 8, **characterised in that** the engine is a large diesel engine.

## Patentansprüche

1. Einspritzventilanordnung eines Verbrennungsmotors zum Einspritzen eines Druckmediums in eine Verbrennungskammer eines Zylinders im Verbrennungsmotor, wobei es sich bei dem Druckmedium um ein zusätzliches Medium zur Reduzierung der Gehalte von sich aus der Verbrennung von Kraftstoff in der Verbrennungskammer ergebenden Schadstoffen handelt, wobei die Anordnung ein Ventilkörperteil (2) mit einem Kraftstoffeinspritzventil (23) mit Düsenöffnungen (24), eine erste Kammer (4), einen Zuführungskanal (8, 8a) zur kontinuierlichen Zuführung des zusätzlichen Mediums zur ersten Kammer (4), mindestens eine von der ersten Kammer (4) ausgehende Düsenöffnung (5a, 5b) zum Einspritzen des zusätzlichen Mediums in die Brennkammer des Zylinders sowie ein Einspritzventil (3) zur Regelung der Zuführung des zusätzlichen Mediums aus der ersten Kammer (4) in die Verbrennungskammer umfaßt, wobei das Einspritzventil (3) ein längliches Ventilelement (6) besitzt, das zu einer Schließposition hin, in der ein Einspritzen des zusätzlichen Mediums verhindert wird, federbelastet (7) ist, **dadurch gekennzeichnet, daß** die Anordnung weiterhin eine zweite Kammer (12), ein Zuführungsmittel (8b) zur Zuführung des zusätzlichen Mediums zur zweiten Kammer (12), so daß der in der letzteren vorherrschende Druck das Ventilelement (6) zur Schließposition hin drückt, sowie ein Regelventil (15) umfaßt, das zur zweiten Kammer (12) gehört und angeordnet ist, um den Druck in der zweiten Kammer (12) so zu regeln, daß eine Bewegung des Regelventils (15) zu einer offenen Position bewirkt, daß der Druck in der zweiten Kammer (12) abfällt, so daß das Ventilelement (6) aus seiner Schließposition in eine Position bewegt wird, die ein Einspritzen des zusätzlichen Mediums zuläßt, und daß die Düsenöffnungen (24) des Kraftstoffeinspritzventils (23) in der axialen Richtung des Zylinders in unterschiedlichen Höhen zu den Düsenöffnungen (5a, 5b) des für das zusätzliche Medium vorgesehenen Ventils (3) angeordnet sind.

2. Einspritzventilanordnung nach Anspruch 1, **dadurch gekennzeichnet, daß** das Zuführungsmittel (8b) eine erste Drosselöffnung (13) umfaßt und daß die zweite Kammer (12) durch eine zweite Drosselöffnung (14) mit dem Regelventil (15) verbunden ist.

3. Einspritzventilanordnung nach Anspruch 2, **dadurch gekennzeichnet, daß** die Mindestquerschnittsfläche der zweiten Drosselöffnung (14) wesentlich größer, vorzugsweise etwa fünfmal größer als die Mindestquerschnittsfläche der ersten Drosselöffnung (13) ist.

4. Einspritzventilanordnung nach einem der vorstehend aufgeführten Ansprüche, **dadurch gekennzeichnet, daß** das Druckregelungsmittel (11) dem Zuführungskanal vorgeschaltet ist, um die Zuführung des zusätzlichen Mediums in die erste und die zweite Kammer (4, 12) zu regeln.

5. Einspritzventilanordnung nach einem der vorstehend aufgeführten Ansprüche, **dadurch gekennzeichnet, daß** es sich bei dem zusätzlichen Medium um Wasser handelt.

6. Einspritzventilanordnung nach einem der vorstehend aufgeführten Ansprüche, **dadurch gekennzeichnet, daß** sich das Regelventil (15) in einer mit einem Entleerungsdurchgang (22) für das zusätzliche Medium ausgestatteten dritten Kammer (16) befindet und daß das Regelventil (15) zu einer geschlossenen Position hin federbelastet (17) ist.

7. Einspritzventilanordnung nach einem der vorstehend aufgeführten Ansprüche, **dadurch gekennzeichnet, daß** es sich bei dem Regelventil (15) um ein Magnetventil handelt, das von einer elektronischen Regelungseinheit (19) aus über elektrische Steuersignale (20), die vom Betrieb des Motors abhängig sind, gesteuert wird.

8. Verbrennungsmotor, der mit einer Einspritzventilanordnung nach einem der vorstehend aufgeführten Ansprüche ausgestattet ist.

9. Verbrennungsmotor nach Anspruch 8, **dadurch gekennzeichnet, daß** es sich bei dem Motor um einen großen Dieselmotor handelt.

## Revendications

1. Agencement de soupape d'injection d'un moteur à combustion interne pour injecter un fluide sous pression dans une chambre de combustion d'un cylindre dans le moteur à combustion interne, le fluide sous pression étant un fluide supplémentaire pour réduire la teneur en substances toxiques résultant de la combustion de carburant dans la chambre de combustion ; l'agencement comprenant une partie de corps de soupape (2) comportant une soupape d'injection de carburant (23) ayant des orifices de buse (24), une première chambre (4), un conduit d'alimentation (8, 8a) pour alimenter la première chambre (4) en continu ledit fluide supplémentaire, au moins un orifice de buse (5a, 5b) partant de la première chambre (4) pour injecter le fluide supplémentaire dans la chambre de combustion du cylindre, une soupape d'injection (3) pour réguler l'alimentation en fluide supplémentaire depuis ladite première chambre (4) dans la chambre de combustion, la soupape d'injection (3) ayant un organe de soupape allongé (6) qui est chargé par ressort (7) vers une position de fermeture dans laquelle l'injection du fluide supplémentaire est empêchée, **caractérisé en ce que** l'agencement comporte en outre une deuxième chambre (12), un moyen d'alimentation (8b) pour alimenter la deuxième chambre (12) en ledit fluide supplémentaire de sorte que la pression régnant dans cette dernière pousse l'organe de soupape (6) vers ladite position de fermeture, et une soupape de régulation (15) associée à ladite deuxième chambre (12) et prévue pour réguler la pression dans ladite deuxième chambre (12) de sorte que le mouvement de la soupape de régulation (15) dans une position ouverte entraîne une chute de la pression dans la deuxième chambre (12) de sorte que l'organe de soupape (6) soit déplacé de sa position de fermeture dans une position permettant l'injection du fluide supplémentaire, et **en ce que** lesdits orifice de buse (24) de la soupape d'injection de carburant (23) sont agencés à différents niveaux dans la direction axiale du cylindre vers le ou les orifice(s) de buse (5a, 5b) de ladite soupape pour fluide supplémentaire (3).

2. Agencement de soupape d'injection selon la revendication 1, **caractérisé en ce que** le moyen d'alimentation (8b) comporte une première ouverture à étranglement (13) et **en ce que** la deuxième chambre (12) est connectée à ladite soupape de régulation (15) par une deuxième ouverture à étranglement (14).

3. Agencement de soupape d'injection selon la revendication 2, **caractérisé en ce que** la surface en section transversale minimale de la deuxième ouverture à étranglement (14) est substantiellement plus grande, de préférence approximativement cinq fois plus grande que la surface en section transversale minimale de la première ouverture à étranglement (13).

4. Agencement de soupape d'injection selon l'une quelconque des revendications précédentes, **caractérisé en ce que** le moyen de régulation de la pression (11) est agencé en amont dudit conduit d'alimentation pour réguler l'alimentation en ledit fluide supplémentaire desdites première et deuxième chambres (4, 12).

5. Agencement de soupape d'injection selon l'une quelconque des revendications précédentes, **caractérisé en ce que** le fluide supplémentaire est de l'eau.

6. Agencement de soupape d'injection selon l'une quelconque des revendications précédentes, **caractérisé en ce que** la soupape de régulation (15) est située dans une troisième chambre (16), qui est pourvue d'un passage d'évacuation (22) pour le fluide supplémentaire, et **en ce que** la soupape de régulation (15) est chargée par ressort (17) vers une position fermée.

7. Agencement de soupape d'injection selon l'une quelconque des revendications précédentes, **caractérisé en ce que** la soupape de régulation (15) est une électrovanne qui est régulée depuis une unité de commande électronique (19) par des signaux de commande électrique (20) qui dépendent du fonctionnement du moteur.

8. Moteur à combustion interne pourvu d'un agencement de soupape d'injection selon l'une quelconque des revendications précédentes.

9. Moteur à combustion interne selon la revendication 8, **caractérisé en ce que** le moteur est un gros moteur diesel.
